# EUROPÄISCHE PATENTSCHRIFT

(11) **EP 1 240 376 B1**
(45) Veröffentlichungstag und Bekanntmachung des Hinweises auf die Patenterteilung: **17.03.2004**
(21) Anmeldenummer: 00983236.1
(22) Anmeldetag: 06.12.2000
(51) Int. Cl.: D06F 37/26, D06F 37/30

(54) **LAUGENBEHÄLTER FÜR EINE WASCHMASCHINE**
WASHING CONTAINER FOR A WASHING MACHINE
CONTENANT A LESSIVE POUR MACHINE A LAVER

(30) Priorität: 15.12.1999 DE 19960501
(43) Veröffentlichungstag der Anmeldung: 18.09.2002
(73) Patentinhaber: BSH Bosch und Siemens Hausgeräte GmbH, 81739 München (DE)
(72) Erfinder: HEYDER, Reinhard, 13403 Berlin (DE); SKRIPPEK, Jörg, 14641 Priort (DE)
(86) Internationale Anmeldenummer: PCT/EP2000/012298
(87) Internationale Veröffentlichungsnummer: WO 2001/044556

(56) Entgegenhaltungen:
- EP-A- 0 219 115
- DE-A- 19 724 930
- DE-U- 9 215 811
- GB-A- 2 202 867
- GB-A- 2 333 300

## Beschreibung

Die Erfindung bezieht sich auf einen Laugenbehälter für eine Waschmaschine mit einer Rückwand aus gespritztem Kunststoff und einer wenigstens im wesentlichen horizontal gelagerten Wäschetrommel, die mit einer in der Rückwand gelagerten und über eine Antriebsvorrichtung angetriebenen Welle drehfest verbunden ist.

Aus der DE 92 15 811 U1 (Oberbegriff des Anspruches 1) ist bereits ein derartiger Laugenbehälter bekannt. Der bekannte Laugenbehälter besteht als ganzer aus Kunststoff und weist somit auch eine Rückwand aus Kunststoff auf. Die Rückwand weist vorzugsweise radial laufende Rippen auf, die die Festigkeit des Laugenbehälters erhöhen, wobei zur Erreichung einer höheren Festigkeit noch ein radialer Ring vorhanden ist, der konzentrisch zu einer zentralen Nabe verläuft. In der Nabe ist über Lager eine Antriebswelle abgestützt, die die Wäschetrommel trägt. Die Welle ist horizontal angeordnet und wird über eine Antriebsvorrichtung angetrieben.

Aus der GB 2 333 300 A und der EP 0 219 115 A2 sind ebenfalls ein Laugenbehälter aus Kunststoff für eine Waschmaschine bekannt

Aus der DE 197 24 930 A1 ist eine Waschmaschine mit einer Antriebsvorrichtung bekannt, durch die die Wäschetrommel direkt angetrieben wird. Der Motor weist einen Ständer auf, der mit der Bodenwand des Laugenbehälters verbunden ist. Der Läufer ist endseitig auf der Welle der Wäschetrommel angeordnet.

Es ist die Aufgabe der Erfindung, einen Laugenbehälter derart zu verbessern, daß er im Hinblick auf die Antriebsvorrichtung eine kompakte Bauweise aufweist.

Erfindungsgemäß wird diese Aufgabe bei einem Laugenbehälter der eingangs genannten Art dadurch gelöst, daß ein Ständertragteil der Antriebsvorrichtung an der Rückwand des Laugenbehälters angeordnet und mit dieser durch Umspritzen des Kunststoffs drehfest verbunden ist.

Das Ständertragteil einer Antriebsvorrichtung besteht vorzugsweise aus Metall, insbesondere ist es ein Graugußteil aus Eisen oder ein Aluminiumgußteil; es läßt sich in eine Kunststoffspritzvorrichtung derart einbringen, daß es von Kunststoff umspritzt werden kann. Dadurch läßt sich eine einfache raumschlüssige oder kraftschlüssige Verbindung mit dem Kunststoffteil erreichen. Dieses Kunststoffteil ist entweder die Rückwand eines

Laugenbehälters, ein die Rückwand umfassendes Teil des Laugenbehälters oder der Laugenbehälter als ganzer.

Das Ständertragteil ist entweder über seine Oberfläche mit dem Kunststoff formschlüssig oder kraftschlüssig verbunden. Dabei weist das Ständertragteil auf der der Kunststoff-Rückwand zugewandten Seite Vorsprünge, Nasen, Einkerbungen oder Ausnehmungen auf, in die der Kunststoff hineingespritzt ist bzw. um die der Kunststoff herumgespritzt ist, so daß eine formschlüssige Verbindung zwischen dem Ständertragteil und der Rückwand entsteht. Alternativ weist das Ständertragteil eine Oberfläche auf, die beispielsweise eine ausreichende Rauhigkeit hat, um eine genügend kraftschlüssige Verbindung zwischen dem Metall des Ständertragteils und dem Kunststoff der Rückwand herzustellen.

Vorzugsweise ist das Ständertragteil zentral um die Antriebswelle herum angeordnet und weist konzentrisch zur Antriebswelle angeordnete Ständerpakete auf, wenn ein direkter Antrieb für die Wäschetrommel vorgesehen ist. Alternativ läßt sich ein Ständertragteil auch außermittig von der Antriebswelle auf der Rückwand des Laugenbehälters anordnen, wenn ein Getriebe oder ein Antriebsriemen in Verbindung mit Riemenscheiben zur Übertragung der Drehbewegung der Antriebsvorrichtung auf die Antriebswelle an der Rückwand des Laugenbehälters angeordnet sind. Eine derartige Antriebsvorrichtung für den indirekten Antrieb, die auf der Rückwand des Laugenbehälters befestigt ist, ist bereits aus der DE 199 11 139 A1 bekannt.

Durch die erfindungsgemäße Ausgestaltung der Rückwand des Laugenbehälters wird eine einfache Lagerung für das Ständertragteil der Antriebsvorrichtung geschaffen, wobei das Ständertragteil durch seine Ausbildung gleichzeitig die Stabilität der Rückwand erhöht. Vorzugsweise ist auch der Ständertragteil von einer ringförmigen Wand umgeben, die mit einer Verstärkungsrippe der Rückwand zusammenwirkt, wobei diese vorzugsweise einen abgewinkelten Steg aufweist, der die ringförmige Wandung des Ständertragteils mindestens teilweise umschließt.

In einer anderen Ausführungsform weist die Rückwand mindestens eine ringförmige Ausbuchtung auf, die von einer Wandung des Ständertragteils umschlossen ist, so daß eine große Verbindungsfläche zwischen der Rückwand und der Ständertragteil entsteht und ein hoher Kraftschluß zwischen beiden zustande kommt. Die Verbindung zwischen der Rückwand und dem Ständertragteil wird dabei zusätzlich noch durch nicht zur Achse der Antriebswelle rotationssymmetrische Ausbuchtungen oder Vorsprünge unterstützt.

Die Erfindung läßt sich sowohl bei einer waagrecht gelagerten Wäschetrommel als auch bei einer geneigt gelagerten Wäschetrommel verwenden, wobei die Wäschetrommel beispielsweise um 15° gegenüber der Horizontalen geneigt ist.

Durch die erfindungsgemäße Ausgestaltung erhält die Antriebsvorrichtung eine kompakte Bauform und läßt sich gleichzeitig auf einfache Weise mit der Rückwand verbinden.

Nachstehend wird die Erfindung in Ausführungsbeispielen anhand der Zeichnungen näher erlautert. Es zeigen:

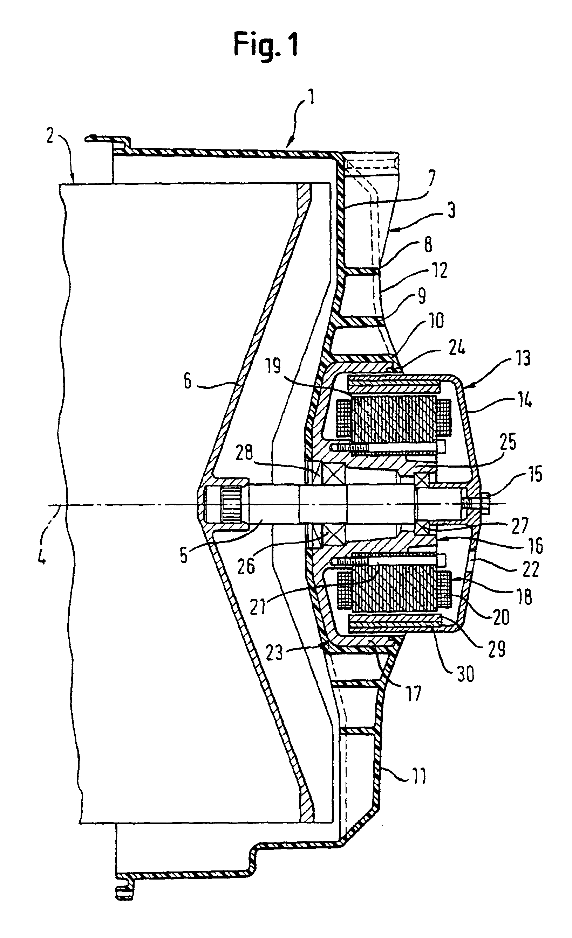

- Fig. 1 bis 4: verschiedene Varianten einer auf der Rückwand eines Laugenbehälters angeordneten Antriebsvorrichtung jeweils im Querschnitt.

Ein Laugenbehälter 1 (Fig. 1) einer Waschmaschine ist auf in hier nicht näher dargestellter Weise in einem Gehäuse der Waschmaschine schwingend gelagert. In ihm ist eine Wäschetrommel 2 angeordnet, die in einer Rückwand 3 des Laugenbehälters 1 über eine horizontal liegende Achse 4 drehbar gelagert ist. Zur Lagerung dient eine Welle 5, die an einer Rückwand 6 der Wäschetrommel 2 drehfest mit dieser verbunden ist.

Der Laugenbehälter 1 ist entweder als ganzer aus Kunststoff hergestellt, oder es ist nur seine Rückwand 3 aus Kunststoff hergestellt. Die Herstellung der Rückwand 3 erfolgt in einem Spritzverfahren. Die Rückwand 3 besteht ihrerseits aus einer Bodenwand 7 und konzentrisch zu der Achse 4 verlaufenden und von der Bodenwand 7 aus nach außen weisenden Verstärkungsringen 8. 9 und 10, durch die ein stabiler Aufbau der Rückwand 3 geschaffen wird. Zusätzlich sind radial verlaufende Verstärkungsrippen 11, 12 vorhanden, die vorzugsweise in gleichen Abständen zueinander von der Mitte der Rückwand 3 aus nach außen verlaufen und die Stabilität der Rückwand 3 erhöhen.

An der Rückwand 3 des Laugenbehälters 1 ist eine Antriebsvorrichtung 13 angeordnet. Die Antriebsvorrichtung 13 umfaßt einen glockenförmig ausgebildeten Läufer 14, der ebenso wie die Wäschetrommel 2 drehfest mit der Welle 5 verbunden ist. Zur Herstellung der Verbindung zwischen dem Läufer 14 und der Welle 5 ist eine Schraube vorgesehen, wobei die Verschraubung des Läufers 14 auf der Welle 5 durch eine Profilwellen-, Profilnaben-, Paßfeder-. Kegel- oder Keilnutverbindung formschlüssig drehfest ist.

Die Antriebsvorrichtung 13 umfaßt einen Ständer 16, der ein Ständertragteil 17 und Ständerpakete 18 aufweist. Die Ständerpakete 18 weisen Blechpakete 19 auf, die von Erregerwicklungen 20 umgeben sind. Die Blechpakete 19 sind mittels Schrauben 21 an dem Ständertragteil 17 befestigt. Die Schrauben 21 sind durch Durchlässe 22 in dem Läufer 14 hindurchsteckbar.

Das Ständertragteil 17 ist fest mit der Rückwand 3 verbunden, in dem es von dem Kunststoff der Bodenwand 7 und des Verstärkungsrings 10 umschlossen ist. Bei seiner Herstellung wird es in die Spritzmaschine eingelegt, so daß es von dem Kunststoff umschlossen wird. Dadurch kommt eine innige und dauerhafte drehfeste Verbindung zwischen einer Wandung 23 des Ständertragteils 17 und der Rückwand 3 zustande. Der Verstärkungsring 10 weist einen Kragen 24 auf, der zu der Achse 4 hinweist und die äußere Kante des Ständertragteils 17 umschließt. Dadurch entsteht auch eine formschlüssige Verbindung zwischen dem Ständertragteil 17 und der Rückwand 3.

Das Ständertragteil 17 ist so ausgebildet, daß es auch eine Lagerhülse 25 zur Aufnahme von Kugel- oder Wälzlagern 26, 27 bildet, über die die Welle 5 in der Rückwand 3 gelagert ist.

Mit einem Absatz der Lagerhülse 25 des Ständertragteils 17 ist ein Dichtring 28 verbunden, der das Austreten von Waschlauge aus dem Laugenbehälter 1 während des Waschvorgangs verhindert.

An dem Läufer 13 sind magnetische Pole 29 segmentartig am inneren Umfang verteilt. Für den magnetischen Rückschluß der Pole 29 sind Dynamobleche 30 vorgesehen.

Die drehfeste Verbindung zwischen dem Ständertragteil 17 und der Rückwand 3 wird vorzugsweise dadurch unterstützt, daß das Ständertragteil 17 auch in Umfangsrichtung formschlüssig mit einerm Teil der Rückwand 3. beispielsweise mit dem Verstärkungsring 10, verbunden ist. Hierzu weist die Wandung 23 des Ständertragteils in vorzugsweise gleichen Abständen voneinander beabstandete vorspringende Rippen auf, die mit entsprechenden Ausnehmungen des Verstärkungsrings 10 korrespondieren; oder umgekehrt weist der Verstärkungsring 10 nach innen in Richtung zu der Wandung 23 weisende Vorsprünge oder Nasen auf, die mit entsprechenden Einkerbungen in der Wandung 23 des Ständertragteils 17 korrespondieren. Hierdurch wird die feste Verbindung zwischen der Rückwand 3 und dem Ständertragteil 17 noch weiter verstärkt.

Für den Fall jedoch, daß der Kunststoff bereits fest mit der Oberfläche der Wandung 23 ausreichend fest verbindbar ist, sind derartige zusätzliche formschlüssige Verbindungen zwischen der Wandung 23 und dem Verstärkungsring 10 oder mit der Bodenwand 7 nicht erforderlich.

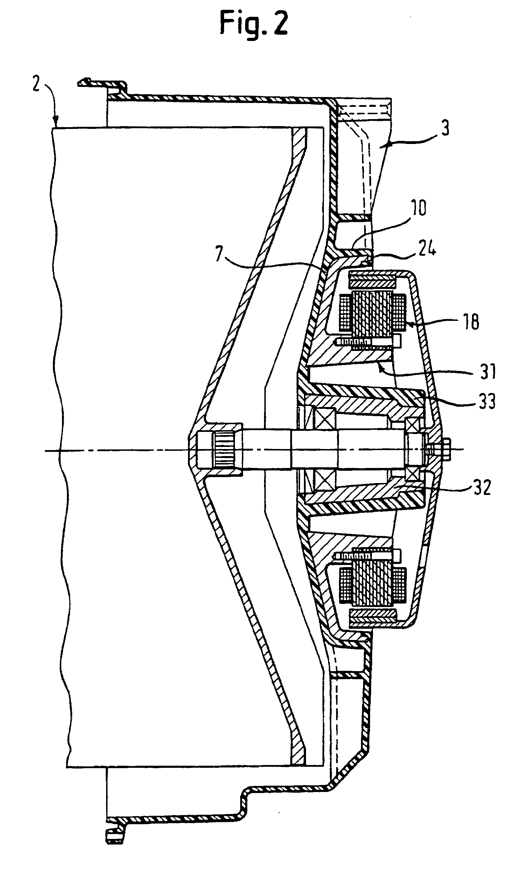

In einem weiteren Ausführungsbeispiel (Fig. 2) ist anstelle des die Lagerhülse 25 einschließenden Ständertragteils 17 ein Ständertragteil 31 vorgesehen, das lediglich die Ständerpakete 18 trägt und ringförmig von der Welle 5 beabstandet ist. Im übrigen ist es in derselben Weise wie das Ständertragteil 17 mit der Rückwand 3 verbunden, wobei eine form- oder kraftschlüssige Verbindung zwischen der Bodenwand 7 und dem Verstärkungsring 10 hergestellt ist.

Anstelle der Lagerhülse 25 ist in der Ausführungsform gemäß Fig. 2 eine gesonderte Lagerhülse 32 vorhanden, die die Wälz- oder Kugellager 26, 27 umschließt und die mit einem Verstärkungsring 33 form- und/oder kraftschlüssig ummantelt ist. Ebenso ist sie mit der Bodenwand 7 in der gleichen Weise verbunden. Bei der gemäß Fig. 2 dargestellten Ausführungsform werden sowohl das Ständertragteil 31 als auch die Lagerhülse 32 in einem gemeinsamen Herstellungsprozeß von dem Kunststoff umspritzt, der die Bodenwand 3 oder den gesamten Laugenbehälter 1 ausbildet. Das Ständertragteil 31 und die Lagerhülse 32 bilden somit integrale Bestandteile der Rückwand 3 und erhöhen deren Stabilität. so daß sie an die Stelle von sonst dort vorhandenen Verstärkungsringen treten. Dadurch wird Material für die Rückwand 3 eingespart und diese erhält einen kompakteren Aufbau als bei getrennter Anordnung der Rückwand 3 und der Antriebsvorrichtung 13 möglich wäre.

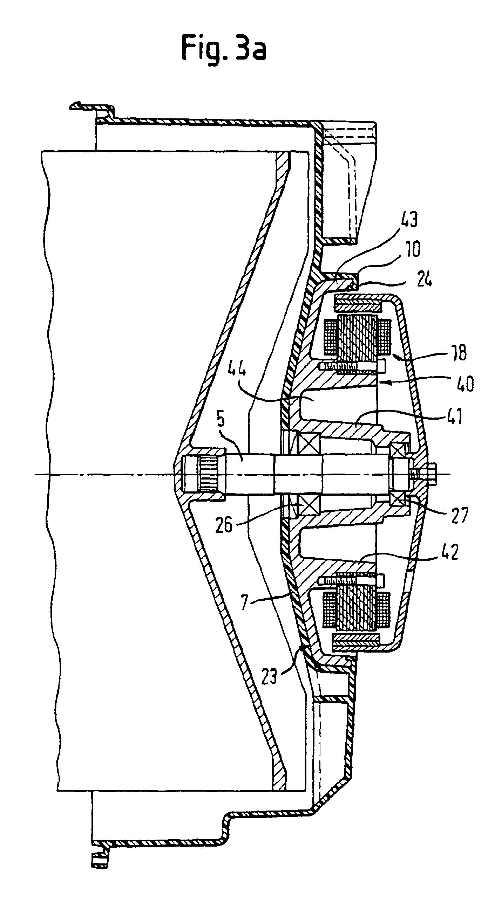

In einer weiteren Ausführungsform (Fig. 3a) ist ein Ständertragteil 40 über seine Wandung 23 mit der Bodenwand 7 verbunden. Das Ständertragteil 40 umfaßt drei konzentrische Ringe 41. 42, 43, von denen der innere Ring 41 die Lagerhülse für die Kugel- oder Wälzlager 26. 27 bildet. Der mittlere Ring 42 trägt auf seiner äußeren Seite, d. h. auf der von der Welle 5 abgewandten Seite die Ständerpakete 18. Der äußere Ring 43 ist mit dem Verstärkungsring 10 form- und/oder kraftschlüssig verbunden. Durch eine zwischen den Ringen 41 und 42 bestehende Ausbuchtung 44 wird ein materialsparender Aufbau des Ständertragteils 40 ermöglicht, wobei gleichzeitig das Ständertragteil 40 durch seine Ausformung zur Erhöhung der Stabilität der Rückwand 3 beiträgt, in dem es fest mit dieser über seine Wandung 23 form- und/oder kraftschlüssig verbunden ist. Vorzugsweise weist der Verstärkungsring 10 den Kragen 24 auf, der den Ring 43 überkragt. Auch im Bereich zwischen der Wandung 23 und der Bodenwand 7 lassen sich Vorsprünge oder Einkerbungen der Wandung 23 vorsehen, die mit entsprechenden Ausnehmungen bzw. Vorsprüngen der Bodenwand 7 korrespondieren. Ebenso lassen sich zwischen den Ringen 41. 42, 43 Verstärkungsrippen vorsehen. wie sie die Rückwand 3 aufweist.

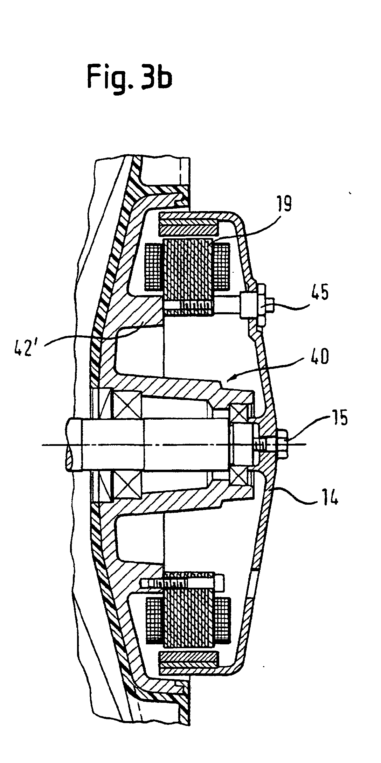

In einem weiteren Ausführungsbeispiel (Fig. 3b) ist der mittlere Ring 42' verkürzt ausgebildet. Während des Transports und zu Beginn der Montage der Ständerpakete 18 auf dem Ständertragteil 40 ist der Läufer 13 mit den Blechpaketen 19 der Ständerpakete über Arretierschrauben 45 verbunden, die gelöst werden, nachdem die Blechpakete 19 mit dem Ständertragteil 40 und der Läufer 13 mittels der Schraube 15 auf der Welle 5 befestigt sind.

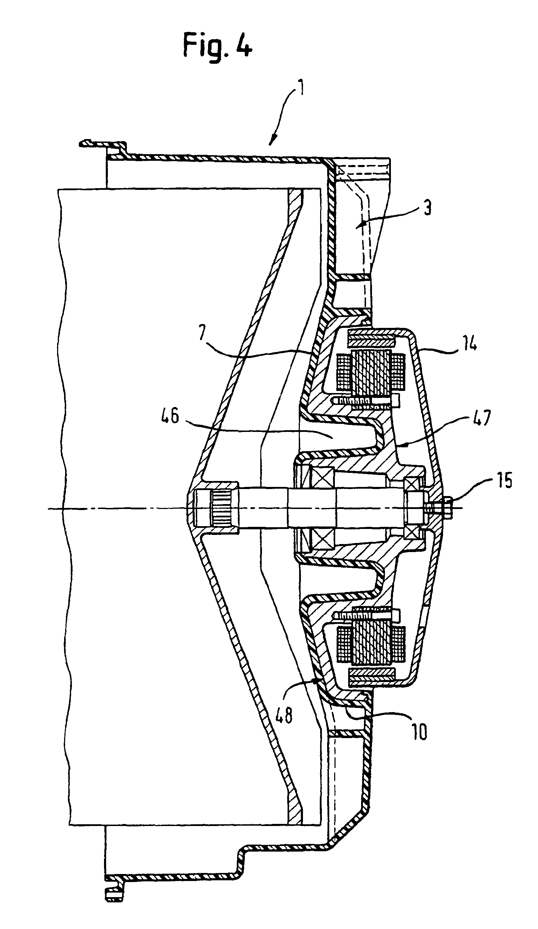

In einem anderen Ausführungsbeispiel (Fig. 4) weist die Bodenwand 7 der Rückwand 3 des Laugenbehälters 1 eine zu der Welle 5 konzentrische ringförmige Ausbuchtung 46 auf, die von einem Ständertragteil 45 fest umschlossen ist. Infolge der Ausbuchtung 46 wird die Fläche einer Wandung 48 des Ständertragteils 47 gegenüber der Fläche der Wandung 23 des Ständertragteils 17, des Ständertragteils 31 oder des Ständertragteils 40 vergrössert. was eine bessere kraftschlüssige Verbindung zwischen der Bodenwand 7 und dem Ständertragteil 47 schafft. Schließlich ist das Ständertragteil 47, wie in Fig. 1 bis 3 dargestellt. mit dem Verstärkungsring 10 der Rückwand 3 verbunden, insbesondere ist auch der Kragen 24 an dem Verstärkungsring 10 vorhanden.

Gemäß der Erfindung werden somit Ständertragteile 17, 31, 40, 47 geschaffen, die durch ihre Wandung 23, 48 eine gute kraftschlüssige Verbindung mit der Bodenwand 7 und/oder dem Verstärkungsring ermöglichen. Zusätzlich sind vorzugsweise Vorsprünge, Nasen, Einkerbungen, Ausnehmungen, Rippen und dergleichen an dem Ständertragteil 17, 31, 40 oder 47 angeordnet, die von zugehörigen Teilen der Rückwand 3. d. h. der Bodenwand 7 oder des Verstärkungsrings 10. umschlossen sind, so daß zu der kraftschlüssigen Verbindung, die bereits durch die Wandung 23 des Ständertragteils 17. 31, 40, 47 gegeben ist, eine formschlüssige Verbindung hinzutritt. Auch durch Ausbuchtung in der Bodenwand 7 und zugehörige Einbuchtungen in dem Ständertragteil 17. 31. 40. 47 wird die kraftschlüssige Verbindung zwischen diesem und der Bodenwand 7 unterstützt.

Auch im Fall einer nicht konzentrisch zu der Welle 5 angeordneten Antriebsvorrichtung hinter der Rückwand 3 des Laugenbehälters 1, wie sie aus der DE 199 11 139 A1 bekannt ist, läßt sich die oben beschriebene Erfindung einsetzen. In allen Fällen wird die Stabilität der Rückwand 3 durch den integralen Einbau der Antriebsvorrichtung unterstützt, und es wird ein konstruktiv einfacher Aufbau des Laugenbehälters 1 in Verbindung mit der Antriebsvorrichtung 13 geschaffen.

## Patentansprüche

1. Laugenbehälter (1) für eine Waschmaschine mit einer Rückwand (3) aus gespritztem Kunststoff und einer wenigstens im wesentlichen horizontal gelagerten Wäschetrommel (2), die mit einer in der Rückwand (3) gelagerten und über eine Antriebsvorrichtung (13) angetriebenen Welle (5) drehfest verbunden ist. **dadurch gekennzeichnet, daß** ein Ständertragteil (17, 31, 40, 47) der Antriebsvorrichtung (13) an der Rückwand (3) des Laugenbehälters (2) angeordnet und mit dieser durch Umspritzen des Kunststoffs drehfest verbunden ist.

2. Laugenbehälter (1) nach Anspruch 1, **dadurch gekennzeichnet, daß** das Ständertragteil (17, 31, 40, 47) formschlüssig und/oder kraftschlüssig mit der Rückwand (3) verbunden ist.

3. Laugenbehälter (1) nach Anspruch 1 oder 2. **dadurch gekennzeichnet, daß** das Standertragteil (17. 31, 40, 47) mit einer Bodenwand (7) und einem Verstärkungsring (10) der Rückwand (3) verbunden ist.

4. Laugenbehälter (1) nach Anspruch 3, **dadurch gekennzeichnet, daß** der Verstärkungsnng (10) einen das Ständertragteil (17, 31, 40, 47) umschließenden Kragen (24) aufweist.

5. Laugenbehälter (1) nach einem der Ansprüche 1 bis 4, **dadurch gekennzeichnet, daß** das Ständertragteil (17, 40, 47) eine Lagerhülse (25) umschließt.

6. Laugenbehälter (1) nach einem der Ansprüche 1 bis 4, **dadurch gekennzeichnet, daß** eine Lagerhülse (32) eine eigene Ummantelung (33) aus Kunststoff aufweist.

7. Laugenbehälter (1) nach einem der Ansprüche 1 bis 6. **dadurch gekennzeichnet, daß** das Ständertragteil (40) aus zu der Welle (5) konzentrischen Ringen (41, 42, 43) besteht.

8. Laugenbehälter (1) nach einem der Ansprüche 1 bis 6. **dadurch gekennzeichnet, daß** die Bodenwand (7) eine zu der Welle (5) konzentrische Ausbuchtung (46) aufweist, die von dem Ständertragteil (47) umschlossen ist.

## Claims

1. Washing solution container (1) for a washing machine, with a rear wall (3) of injection-moulded plastics material and a laundry drum (2), which is mounted to be at least substantially horizontal and which is connected with a shaft (5) to be secure against rotation relative thereto, the shaft being mounted in the rear wall (3) and driven by way of a drive device (13), **characterised in that** a stator support part (17, 31, 40, 47) of the drive device (13) is arranged at the rear wall (3) of the washing solution container (2) and is connected with this to be secure against rotation relative thereto by injection-moulding of the plastics material around the support part.

2. Washing solution container (1) according to claim 1, **characterised in that** the stator support part (17, 31, 40, 47) is connected with the rear wall (3) in shape-locking and/or force-locking manner.

3. Washing solution container (1) according to claim 1 or 2, **characterised in that** the stator support part (17, 31, 30, 47) is connected with a base wall (7) and a reinforcing ring (10) of the rear wall (3).

4. Washing solution container (1) according to claim 3, **characterised in that** the reinforcing ring (10) has a collar (24) enclosing the stator support part (17, 31, 40, 47).

5. Washing solution container (1) according to one of claims 1 to 4, **characterised in that** the stator support part (17, 40, 47) encloses a bearing sleeve (25).

6. Washing solution container (1) according to one of claims 1 to 4, **characterised in that** a bearing sleeve (32) comprises an own sheathing (33) of plastics material.

7. Washing solution container (1) according to one of claims 1 to 6, **characterised in that** the stator support part (40) consists of rings (41, 42, 43) concentric with the shaft (5).

8. Washing solution container (1) according to one of claims 1 to 6, **characterised in that** the base wall (7) has an outward bulge (46) which is concentric with the shaft (5) and is surrounded by the stator support part (47).

## Revendications

1. Contenant à lessive (1) pour une machine à laver avec une paroi arrière (3) en matière synthétique injectée et un tambour à linge (2) logé au moins essentiellement horizontalement qui est relié en rotation à un arbre (5) logé dans la paroi arrière (3) et actionné au moyen d'un mécanisme moteur (13), **caractérisé en ce qu'**une partie porteuse de support (17, 31, 40, 47) du mécanisme moteur (13) est disposée sur la paroi arrière (3) du contenant à lessive (2) et est reliée à celui-ci en rotation par injection de la matière synthétique.

2. Contenant à lessive (1) selon la revendication 1, **caractérisé en ce que** la partie porteuse de support (17, 31, 40, 47) est reliée par engagement positif et/ou de manière à pouvoir transmettre une force à la paroi arrière (3).

3. Contenant à lessive (1) selon la revendication 1 ou 2, **caractérisé en ce que** la partie porteuse de support (17, 31, 40, 47) est reliée à une paroi de fond (7) et à un anneau de renforcement (10) de la paroi arrière (3).

4. Contenant à lessive (1) selon la revendication 3, **caractérisé en ce que** l'anneau de renforcement (10) présente une collerette (24) entourant la partie porteuse de support (17, 31, 40, 47).

5. Contenant à lessive (1) selon l'une des revendications 1 à 4, **caractérisé en ce que** la partie porteuse de support (17, 40, 47) entoure un porte-moyeu (25).

6. Contenant à lessive (1) selon l'une des revendications 1 à 4, **caractérisé en ce qu'**un porte-moyeu (32) présente un revêtement propre (33) en matière synthétique.

7. Contenant à lessive (1) selon l'une des revendications 1 à 6, **caractérisé en ce que** la partie porteuse de support (40) se compose d'anneaux concentriques (41, 42, 43) à l'arbre (5).

8. Contenant à lessive (1) selon l'une des revendications 1 à 6, **caractérisé en ce que** la paroi de fond (7) présente une indentation (46) concentrique à l'arbre (5) qui est entourée par la partie porteuse de support (47).
